# EUROPEAN PATENT APPLICATION

(11) **EP 2 161 905 A1**
(43) Date of publication of application: **10.03.2010**
(21) Application number: 08765813.4
(22) Date of filing: 24.06.2008
(51) Int. Cl.: H04M 1/00, G06F 17/21, G06F 17/30

(54) **TERMINAL, FUNCTION STARTING-UP METHOD AND PROGRAM FOR TERMINAL**

(30) Priority: 26.06.2007 JP 2007167239
(71) Applicant: Nec Corporation, Tokyo 108-8001 (JP)
(72) Inventor: YAMADA, Eiko, Tokyo 108-8001 (JP); IWAKI, Yoshihiro, Tokyo 108-8001 (JP)
(74) Representative: Betten & Resch
(86) International application number: PCT/JP2008/061481
(87) International publication number: WO 2009/001828

(57) **Abstract**

Even while a terminal is executing a function that requires character entry, the present invention allows the user to start another function without having to perform an extra operation. The terminal includes a display unit and a character conversion unit that recognizes a function related to entered characters in a character acceptable state, converts the entered characters to a symbol to be displayed on the display unit for starting the recognized function, and outputs the symbol. The terminal further includes a control unit that starts the function corresponding to the symbol displayed on the display unit.

## Description

### TECHNICAL FIELD

### (CROSS-REFERENCE TO RELATED APPLICATIONS)

The present application claims priority from Japanese Patent Application 2007-167239 (filed on June 26, 2007) the content of which is hereby incorporated herein in its entirety by reference thereto.
The present invention relates to a terminal, a function startup method, and a program for a terminal, and more particularly to a mobile terminal, a function startup method, and a program for a terminal that, even during the execution of a function that requires character entry, another function can be started without requesting the user to perform an extra operation.

### BACKGROUND ART

Recently, the function of a mobile terminal, such as a mobile phone, a PHS (Personal Handyphone System) terminal, or a PDA(Personal Digital Assistants), has significantly increased. For example, not only the phone call function and electronic mail function but a variety of functions, such as the Internet connection function, schedule function, address book function, camera function, and one-segment broadcasting receiver function for digital terrestrial broadcasting, are now available on a mobile terminal.

This requires a mobile terminal user, who wants to start a desired function, to memorize the function startup procedure used on the mobile terminal and perform the operation according to the procedure. And so, the user who does not know the function startup procedure must refer to the instruction manual of the mobile terminal and the user sometimes feels cumbersome to do so. Such a situation occurs also in various peripheral devices and information appliances.

For example, assume that a mobile terminal user, who is entering characters using an application such as the electronic mail function or the address book function, wants to start another function (for example, camera function). In this case, the user first opens the function menu. And, from the list of functions of the menu, the user selects a desired function (for example, camera function) to start it. In this manner, the user is required to perform a cumbersome procedure.

There has been a requirement from mobile terminal users for starting a desired function without having to perform an extra operation described above. To solve this problem, related technologies are proposed that provide means to start a desired function easily (for example, see Patent Document 1).

Patent Document 1 "Application startup method and mobile terminal using the method" given above describes the following function startup method. That is, when a part of characters of the name of an application to be started is entered, the mobile terminal searches all application names for the candidates for the corresponding application name. And, the mobile terminal sorts the search result according to the startup frequency and displays the sort result on the display screen. When the user selects the name of a desired application from the candidate list displayed on the display screen, the application with the selected application name is started. This startup method eliminates the need for the user to remember a new operation method and, immediately after the user enters characters, starts the search to allow the user to start a desired application of the mobile terminal from the search result list.

Another related technology proposes a function search execution device that allows the user to simply select a desired function even if the user does not memorize the operation method for executing that function (for example, see Patent Document 2).

Patent Document 2 "Function search execution device" given above describes the following function startup method. That is, the function search execution device includes search means and an internal dictionary. When the user enters a keyword related to a function, the search means searches the internal dictionary for the keyword and displays the keyword and the function candidate names on the display means. When the user selects a particular function candidate name from the function candidate names, the selected particular function is executed.

Patent Document 1:
   Japanese Patent Kokai Publication No. JP2005-258524A (pp. 5-9, FIGS. 1-4)
Patent Document 2:
   Japanese Patent Kokai Publication JP-H08-152987A (pp. 3-5, FIGS. 1-5)

### DISCLOSURE OF THE INVENTION

### PROBLEMS TO BE SOLVED BY THE INVENTION

The disclosure of Patent Documents given above is hereby incorporated herein by reference thereto.
The application startup method described in Patent Document 1 described above, which relats to the present invention, first executes a search program stored in the mobile terminal and, after that, requests the user to enter a part of characters of the name of an application to be started. The problem with this method is that a mobile terminal user is required to perform an extra operation for executing the search program.

The function search execution device described in Patent Document 2 given above requires the user, who is executing a function and wants to execute another function, to first start the search means. The problem with this method is that the user is required to perform an extra operation for starting the search means.

The present invention aims to solve the problems described above. It is an object of the present invention to provide a terminal, a function startup method, and a program for a terminal that, even during the execution of a function that requires character entry, another function can be started without requesting the user to perform an extra operation.

### MEANS TO SOLVE THE PROBLEMS

According to a first aspect of the present invention, there is provided a terminal comprising: a display unit; and a character conversion unit that recognizes a function related to entered characters in a character acceptable state, converts the entered characters to a symbol to be displayed on the display unit for starting the recognized function, and outputs the symbol. The terminal further comprises a control unit that starts the function corresponding to the symbol displayed on the display unit.

According to a second aspect of the present invention, there is provided a function startup method comprising a conversion step that recognizes a function related to entered characters in a character acceptable state, and converts the entered characters to a symbol for starting the recognized function; and a display step that displays the converted symbol on a display unit. The function startup method further comprises a startup step that starts the function corresponding to the symbol displayed on the display unit.

According to a third aspect of the present invention, there is provided a program causing a terminal to execute conversion processing of recognizing a function related to entered characters in a character acceptable state and converting the entered characters to a symbol for starting the recognized function; display processing of displaying the converted symbol on a display unit; and startup processing of starting the function corresponding to the symbol displayed on the display unit.

### EFFECT OF THE INVENTION

Even while a terminal is executing a function that requires character entry, the present invention allows the user to start another function without having to perform an extra operation.

### BRIEF DESCRIPTION OF THE DRAWINGS

FIG. 1 is a block diagram showing an exemplary embodiment of a mobile terminal of the present invention.
FIG. 2 is a block diagram showing a first example of the mobile terminal of the present invention.
FIG. 3 is a detailed block diagram showing an example of a character conversion unit.
FIG. 4 is a detailed configuration diagram showing an example of a function name dictionary.
FIG. 5 is a flowchart showing the operation of the example.
FIGS. 6A to 6E is a diagram showing an example of the display screen of the operation of the example.
FIG. 7 is a block diagram showing a second example of the mobile terminal of the present invention.
FIG. 8 is a detailed block diagram showing an example of a character conversion unit in the second example.
FIG. 9 is a flowchart showing the operation of the second example.

### EXPLANATIONS OF SYMBOLS

- 10: Control unit
- 11: Character conversion unit
- 12: Input character conversion unit
- 13: Function name search unit
- 14: Symbol output unit
- 11-1: Character conversion unit
- 12-1: Input character conversion unit
- 13-1: Function name search unit
- 14-1: Symbol output unit
- 20: Storage unit
- 21: Character conversion dictionary
- 22: Function name dictionary
- 30: Display unit
- 40: Operation unit
- 50: Camera
- 100: Mobile terminal

### PREFERRED MODES FOR CARRYING OUT THE INVENTION

Next, examples of the present invention will be described below with reference to the drawings.

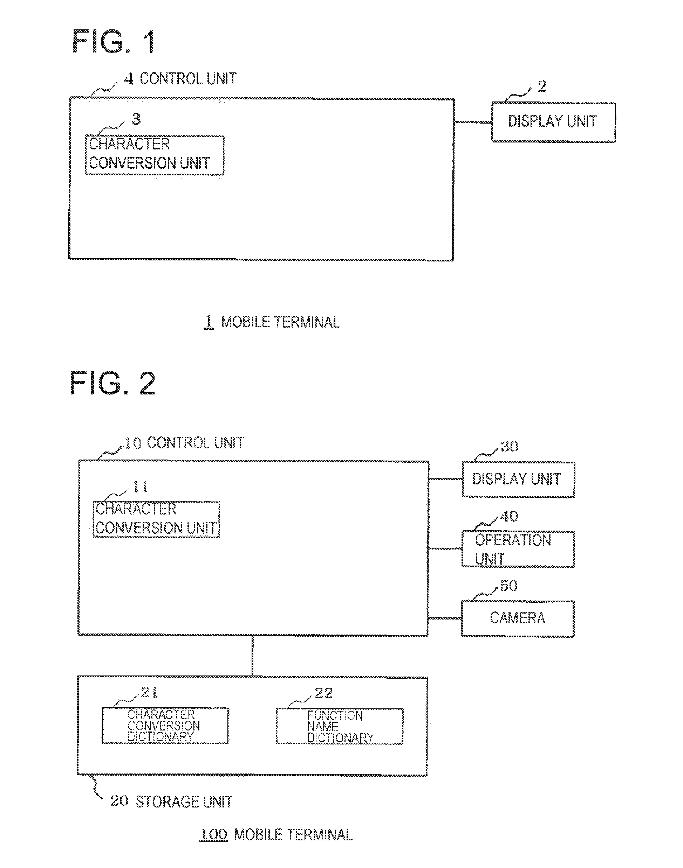

FIG. 1 is a block diagram showing an exemplary embodiment of a mobile terminal of the present invention.

A mobile terminal 1 shown in FIG. 1 comprises a display unit 2, a character conversion unit 3, and a control unit 4, The character conversion unit 3 recognizes a function related to the characters entered in a character acceptable state, for example, when the mail function or the data input function is executed. In addition, the character conversion unit 3 converts the entered characters to a symbol that is displayed on the display unit 2 for starting the recognized function and outputs the converted symbol. The control unit 4 starts the function corresponding to the symbol displayed on the display unit 2.

The function in the above description refers to a function, such as the camera function, schedule function, and so on provided on the mobile terminal 1 that can be executed through the operation via the general function menu display screen.

The symbol refers to icon information, character string information, or pictograph information that indicate a function in an easy-to-understand fashion.

In FIG. 1, the character conversion unit 3 is included in the control unit 4. This is because the control unit 4 operates under program control of a CPU and the character conversion unit 3 also operates under control of the CPU. Note that the character conversion unit 3 in the embodiment of the present invention may be independent of the control unit 4.

When the mobile terminal 1 is in the character acceptable state, for example, when a function requiring character entry is being executed, the user of the mobile terminal 1 shown in FIG. 1 is only required to enter function-recognizable characters without having to display the menu screen for the operation. When the user enters the characters, the character conversion unit 3 recognizes the function related to the entered characters and displays a symbol corresponding to the function on the display unit 2 and the control unit 4 starts the function.

This means that, even during the execution of a function that requires character entry, the user can start another function in this embodiment without performing an extra operation.

In addition, the symbol displayed on the display unit 2 allows the user to recognize that the related function may be started immediately after the user enters characters.

In this embodiment, when the control unit 4 starts a function, the control unit 4 preferably starts the function after the user operates on or specifies the symbol displayed on the display unit 2. This instruction or operation does not request the user to perform an extra operation and so does not give the user any load.

Next, the following describes a first example of the present invention that further embodies the first exemplary embodiment, shown in FIG. 1, using a dictionary table for recognizing characters.

FIG. 2 is a block diagram showing the first example of the mobile terminal of the present invention.

A mobile terminal 100, shown in FIG. 2, comprises a control unit 10 that generally controls the operation of the mobile terminal 100 and a storage unit 20 that stores information such as a dictionary. The mobile terminal 100 further comprises a display unit 30 that displays information output from the control unit 10, an operation unit 40 via which an instruction or data is input to the control unit 10, and a camera 50 that photographs (takes a shot of) an image.

The mobile terminal 100 in this example is a portable mobile terminal such as a mobile phone, a PHS terminal, or a PDA. Therefore, the mobile terminal 100 in FIG. 2 may further comprise a radio unit or an antenna for connection to a mobile communication network, a voice input unit or a voice output unit for voice communication, and a speaker that outputs a ringtone or an alarm sound.

The control unit 10 includes a CPU(Central Processing Unit), not shown, that executes software, stored in the storage unit 20, to control the operation of the mobile terminal 100.

The control unit 10 executes various functions of the mobile terminal 100 such as the phone call sending/receiving function, call function, electronic mail function, Internet connection function, schedule function, address book function, camera function, and telephone book function. In addition, the control unit 10 executes the character conversion function.

The character conversion function is implemented by a character conversion unit 11 of the control unit 10. The character conversion unit 11 converts kana (Japanese alphabets) or alphabetical character information, received via the operation unit 40 when electronic mail is created or schedule data is received, to kanji or symbol data.

The storage unit 20 stores software(s), which executes various functions of the mobile terminal 100, and numeric data, character data, or image data to be processed by various functions. In addition, the storage unit 20 includes a character conversion dictionary table (hereinafter simply called a character conversion dictionary) 21 referenced by the character conversion unit 11 during execution of the character conversion function and a function name dictionary table (hereinafter simply called a function name dictionary) 22 in which the names of all functions executable by the mobile terminal 100 are stored.

The character conversion dictionary 21 is a basic dictionary for performing the so-called kana-kanji conversion for converting kana and alphabetical input character information to kanji data. The character conversion dictionary 21 may be composed of a prediction dictionary that predicts the characters or a sentence, which will be entered by the user, upon receiving kana, alphabetical, or numeric characters from the user, and outputs the conversion candidates. The character conversion dictionary 21 may also be a dictionary that has a function to learn conversion candidate character information from the past conversion results and registers the learned results in the dictionary for storing therein.

The function name dictionary 22 is a dictionary table in which character data on the names of all functions of the mobile terminal 100 is stored. For example, when the mobile terminal 100 has the camera function, the function name dictionary 22 includes character data on a function name, "CAMERA ( 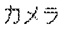 ) ", that represents the camera function. When the mobile terminal 100 has the schedule function, the function name dictionary 22 includes character data on a function name "SCHEDULE ( 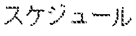 ) " that represents the schedule function.

The display unit 30 displays various types of information, such as the character information, symbol information, and image information, that are output from the control unit 10 including the character conversion unit 11. The display unit 30 also displays data converted by the character conversion unit 11 of the control unit 10, such as kanji characters (Chinese characters), conversion candidate characters, and a symbol composed of an icon or a particular character string.

The operation unit 40 has various keys required for the operation of the mobile terminal 100 including numeric keys, a cross key, or function keys for executing various functions such as telephone call sending and telephone book reference. Trough those keys, the user sends an instruction or data to the control unit 10.

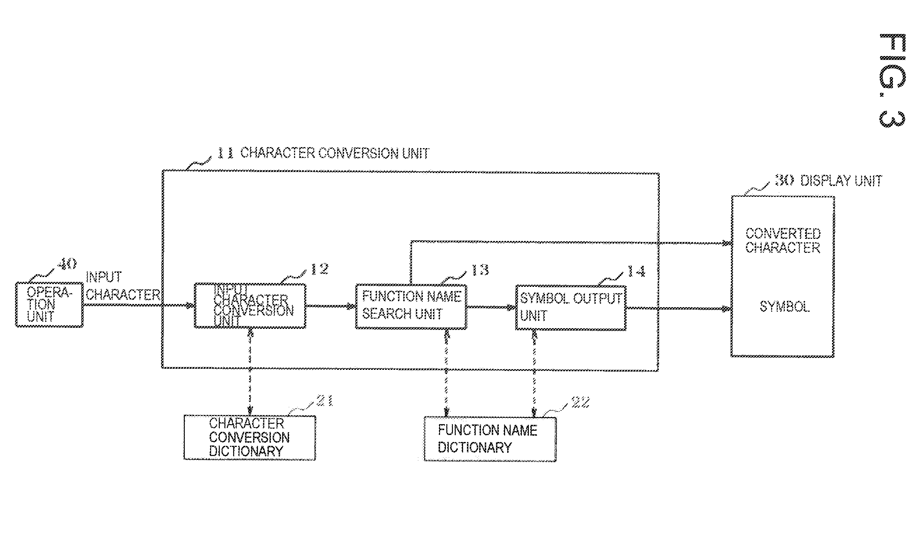

Next, referring to FIG. 3, the following describes the detailed configuration of the character conversion unit 11 shown in FIG. 2.

FIG. 3 is a detailed block diagram showing an example of the character conversion unit. In FIG. 3, the same reference numeral or symbol is used to denote the same element in FIG. 2, and the further description of that element will be omitted.

The character conversion unit 11 shown in FIG. 3 comprises an input character conversion unit 12, a function name search unit 13, and a symbol output unit 14.

The input character conversion unit 12 receives input character information, composed of kana or alphabetic characters entered from the operation unit 40, and converts the received characters to data, which indicates kanji characters, katakana characters, or hiragana characters (Japanese alphabets), by referencing the character conversion dictionary 21. After that, the input character conversion unit 12 sends the converted character data to the function name search unit 13.

The function name search unit 13 receives the converted character data from the input character conversion unit 12 and searches the function name dictionary 22 to check if the converted character data is stored in the function name dictionary as a word. If the converted character data is stored in the function name dictionary 22, the function name search unit 13 sends the character data on the function name, corresponding to the converted character data, to the symbol output unit 14. If the converted character data is not stored in the function name dictionary 22, the function name search unit 13 sends the converted character data, received from the input character conversion unit 12, directly to the display unit 30.

The symbol output unit 14 receives character data on a function name from the function name search unit 13. And, the symbol output unit 14 references the function name dictionary 22, selects symbol information for starting the function corresponding to the character data on the function name, and sends the selected symbol information to the display unit 30. The symbol information refers to the information indicating an icon or a character string for starting the function.

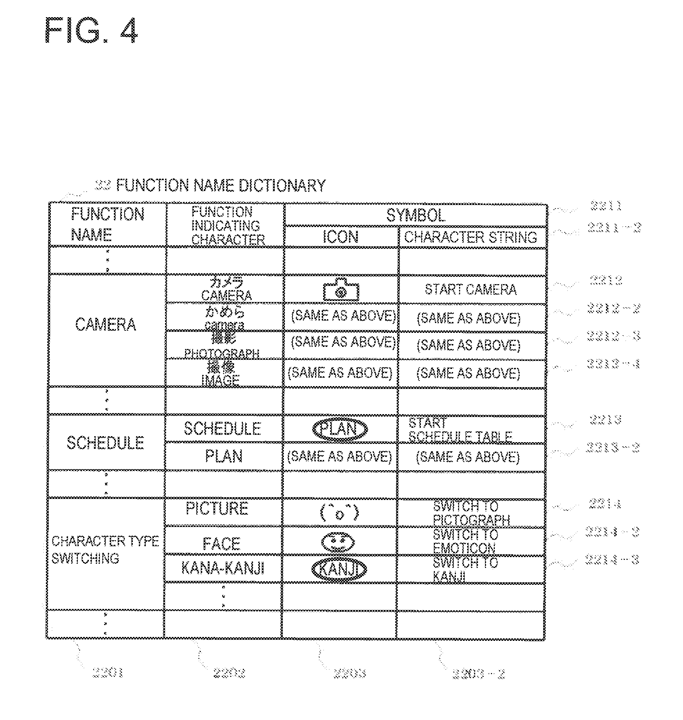

Next, referring to FIG. 4, the following describes the detailed configuration of the function name dictionary 22 shown in FIG. 2,

FIG. 4 is a detailed configuration diagram showing an example of the function name dictionary.

As described above, the function name dictionary 22 shown in FIG. 4 is a dictionary table in which the character data on the names of all functions of the mobile terminal 100 and the information and data related to that character data are stored.

As shown in a row 2211 in FIG. 4, the function name dictionary 22 includes the function name column (column 2201 in FIG. 4), the function-indicating character column (column 2202), and the symbol column (column 2203). Note that a column corresponds to a storage area.

The function name column (column 2201) stores character data on the names of all functions of the mobile terminal 100. FIG. 4 shows an example of character data such as data related to the camera function (row 2212 in FIG. 4), data related to the schedule function (row 2213), and data related to the character type switching function (row 2214). The camera function is a function for photographing by means of a camera of the mobile terminal 100 or for browsing photographed image data. The schedule function is a function for filling the schedule table of the mobile terminal 100 with schedules or for browsing the contents of the schedule table. The character type switching function is a function for switching the type of input characters when characters are entered on the mobile terminal 100, for example, for creating email. The character types include kana-kanji characters, pictographs, emoticons (emotional face symbols), alphanumeric characters, and so on. Those functions are started and executed by the control unit 10.

The function-indicating character column (column 2202) contains keywords each provided for starting the function corresponding to a function name stored in the function name column (column 2201). Therefore, when the user wants to start the camera function of the mobile terminal 100 and enters the keyword "CAMERA" [ 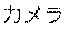 ] (cell at the intersection of the column 2202 and the row 2212), the function name search unit 13 of the character conversion unit 11 in FIG. 3 searches the function name dictionary 22 using the keyword. When the character data "CAMERA" [ 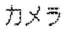 ] is found in the function-indicating character column (column 2202) in FIG. 4, the function name search unit 13 determines that the user wants to start the camera function. In addition, when the keyword camera" [ 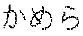 ] (cell at the intersection of column 2202 and row 2212-2) is entered, the function name search unit 13 determines that the user wants to start the camera function. Similarly, when the keyword *"photograph*" [ 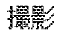 SATSUEI ] (cell at the intersection of column 2202 and row 2212-3) or the keyword "image" [ 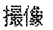 SATSUZOU ] (cell at the intersection of column 2202 and row 2212-4) is entered, the function name search unit 13 determines that the user wants to start the camera function.

As an another example, when the user wants to switch the input character type while entering characters into the mobile terminal 100 and enters the keyword "PICTURE" [ 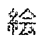 ] (cell at the intersection of column 2202 and row 2214), the function name search unit 13 determines that the user wants to start the character type switching function and, at the same time, switch the character type to the pictograph. Also, when the user enters the keyword "FACE" (cell at the intersection of column 2202 and row 2214-2), the function name search unit 13 determines that the user wants to switch the character type to the emoticon (face logo representing emotion).

The symbol column (column 2203) contains symbol information that indicates a symbol for starting a function included in the function name column (column 2201). For example, the symbol column (column 2203) contains an icon representing the shape of a camera (cell at the intersection of column 2203 and row 2212) as the symbol for starting the camera function of the mobile terminal 100. Alternatively, the symbol column (column 2203) may contain the character string "start camera"(cell at the intersection of column 2203-2 and row 2212) as another symbol for starting the camera function of the mobile terminal 100.

As a still another example, an icon representing a pictograph (cell at the intersection of column 2203 and row 2214) is used as a symbol for switching the input character type to the pictograph while characters are entered into the mobile terminal 100. Alternatively, the character string "switch to pictograph" (cell at the intersection of column 2203-2 and 2214) may be used as another symbol for switching the input character type to the pictograph.

That is, an icon (column 2203) may be used as a symbol for starting a function of the mobile terminal 100 or a character string (column 2203-2) may be used as another symbol. The user of the mobile terminal 100 may select which symbol to use.

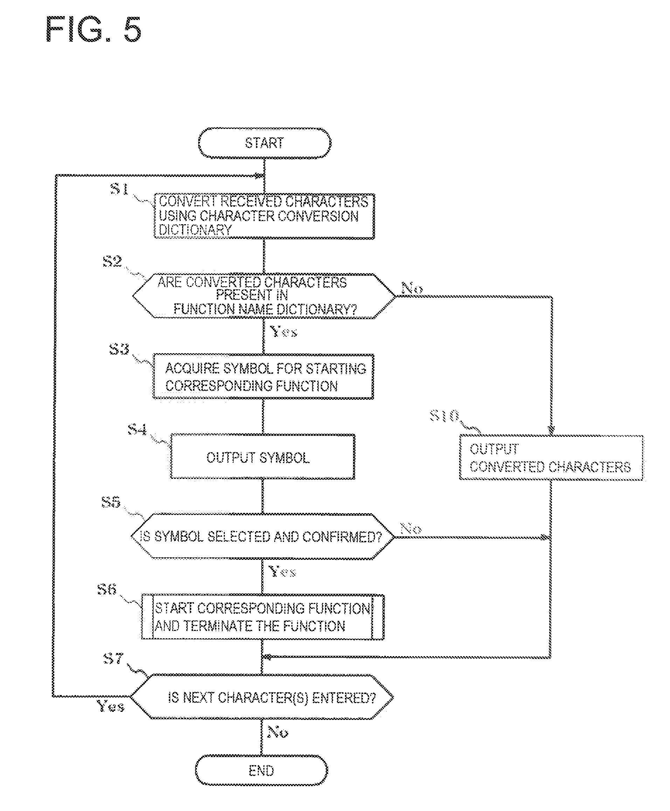

Next, the following describes the operation of this example in detail with reference to FIG. 5.

FIG. 5 is a flowchart showing the operation of this example.

First, the user starts entering characters on the mobile terminal 100. For example, the user uses the electronic mail function to enter the text of electronic mail.

When the character entry is started, the input character conversion unit 12 of the character conversion unit 11 accepts input character information entered from the operation unit 40. The input character conversion unit 12 uses the character conversion dictionary 21 to convert the input character information to character data such as kanji (Chinese characters), katakana (Japanese alphabets), and hiragana (Japanese alphabets) data (step S1 in FIG. 5). After that, the input character conversion unit 12 sends the converted character data to the function name search unit 13.

The function name search unit 13 receives the converted character data from the input character conversion unit 12 and searches the function name dictionary 22 to check if the converted character data is stored as a word (step S2). The function name search unit 13 performs this search by searching the function-indicating character column (column 2202 in FIG. 4) of the function name dictionary 22 to check if the converted character data is present.

If the converted character data is not present in the function name dictionary 22 (No in step S2), the function name search unit 13 sends the converted character data to the display unit 30 without any change (step S10). After that, control is passed to step S7.

If the converted character data is present in the function name dictionary 22 as a keyword (Yes in step S2), the function name search unit 13 acquires the character data on the function name corresponding to the converted character data. After that, the function name search unit 13 sends the acquired character data on the function name to the symbol output unit 14. To acquire the character data on the function name, the function name search unit 13 acquires data from the cell of the function name column (column 2201 in FIG. 4) that corresponds to the function-indicating character cell (that is, the cell containing the characters that match the converted characters)of the function name dictionary 22. For example, when the converted character data is "CAMERA" [ 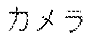 ], the character data on the function name corresponding to "CAMERA" is "CAMERA" as indicated by row 2212 of the function name dictionary 22 in FIG. 4. When the converted character data is "*photograph*", the character data on the corresponding function name is also "CAMERA" as indicated by row 2212-3 in FIG. 4.

When the character data on the function name is received from the function name search unit 13, the symbol output unit 14 references the function name dictionary 22 and acquires the symbol information on the symbol for starting the function corresponding to the character data on the function name (step S3). And, the symbol output unit 14 sends the acquired symbol information to the display unit 30 (step S4). To acquire the symbol information, the symbol output unit 14 acquires the symbol information, corresponding to the function name, from the symbol column (column 2203 in FIG. 4 or column 2203-2 in FIG. 4) of the function name dictionary 22. For example, when the function name is "CAMERA" and the user of the mobile terminal 100 selects to use an icon as the symbol, the symbol output unit 14 acquires the symbol information on an icon representing the shape of a camera at the intersection of row 2212 and column 2203 in FIG. 4. Similarly, when the function name is "CAMERA" and the user of the mobile terminal 100 selects to use a character string as the symbol, the symbol output unit 14 acquires the character string "start camera" at the intersection of row 2212 and column 2203-2 in FIG. 4 as the symbol information.

The character conversion unit 11 checks if the symbol displayed on the display unit 30 is selected and confirmed (step S5). The operation to select and confirm a symbol on the display unit 30 is performed via the operation unit 40. That is, to select and confirm the symbol, the user moves the cursor to the symbol displayed on the display unit 30 and presses the Confirm key.

If the symbol is selected and confirmed (Yes in step S5), the character conversion unit 11 returns the control of the mobile terminal 100 to the control unit 10 of the mobile terminal 100. After the function corresponding to the symbol is started and the execution of that function is terminated (step S6), the control unit 10 returns the control of the mobile terminal 100 to the character conversion unit 11. That is, the character conversion unit 11 returns to the state in which the character entry operation is continued. Note that the operation in step S6 in FIG. 5 is the operation performed, not by the character conversion unit 11, but by the control unit 10.

The character conversion unit 11 checks if the next input character information is entered (step S7).

If the next input character information is entered (Yes in step S7), control is passed back to step S1 and the character conversion unit 11 performs the input character conversion operation again.

If the symbol on the display unit 30 is not selected and confirmed in step S5, for example, if the symbol is erased (No in step S5), the character conversion unit 11 passes control to step S7 and checks if the next input character is entered.

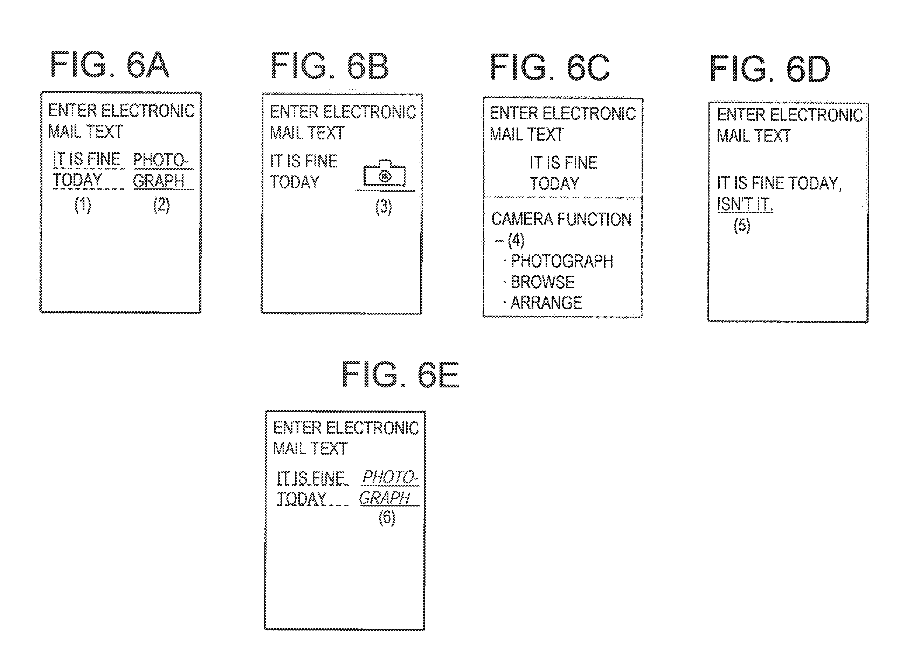

Next, referring to FIGS. 6A to 6E, the following describes an example of the actual operation of the example shown in FIG. 5.

FIGS. 6A to 6E is a diagram showing an example of the display screen of the operation of this example.

Assume that the user is entering the text of electronic mail using the electronic mail function of the mobile terminal 100 as shown in FIG. 5. Also assume that the user of the mobile terminal 100 has selected to use an icon as the symbol for starting the function of the mobile terminal 100.

As shown in FIG. 6A, assume that part (1) of the text of electronic mail is already entered and that the input characters "photograph" shown in (2) has just been entered.

The input character conversion unit 12 of the character conversion unit 11 references the character conversion dictionary 21 and converts the entered characters "photograph" [SATSUEI] to kanji character data *"photograph"* [ 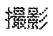 ] (step S1 in FIG. 5). And, the input character conversion unit 12 sends the converted character data to the function name search unit 13.

The function name search unit 13 searches the function name dictionary 22 to check if the converted character data *"photograph*" [ 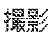 ] is stored as a word (step S2 in FIG. 5).

The converted character data *"photograph*" [ 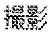 ] is stored in the function-indicating character column (column 2202) of the function name dictionary 22 (row 2212-3 in FIG. 4). Therefore, the function name search unit 13 acquires "CAMERA" as the character data on the function name corresponding to *"photograph*" [ 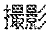 ] (row 2212-3 in FIG. 4) and sends the acquired data to the symbol output unit 14.

The symbol output unit 14 references the function name dictionary 22, acquires an icon , which indicates the shape of a camera, as the symbol information corresponding to the function name "CAMERA" [ 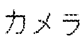 ] (step S3 in FIG. 5), and sends the acquired icon to the display unit 30 (step S4 in FIG. 5). On the display unit 30, the icon indicating the shape of a camera is displayed as shown in (3) in FIG. 6B.

When the icon indicated by (3) in FIG. 6B is selected and confirmed (Yes in step S5 in FIG. 5), the camera function of the mobile terminal 100 is started as shown in (4) in FIG. 6C (step S6 in FIG. 5).

When the camera function started in FIG. 6C(4) is terminated, the character conversion unit 11 starts the operation again. And, when the next input characters are entered as shown in (5) in FIG. 6D (Yes in step S7 in FIG. 5), the electronic mail text entry operation, which had been performed before the camera function was started, is restarted.

If the entered characters "photograph" [ SATSUEI ] shown in (2) in FIG. 6A is converted to the kanji character data *"photograph*" [ 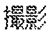 ] but the converted character data *"photograph*" is not stored in the function name dictionary 22, the character conversion unit 11 performs the following operation. That is, the function name search unit 13 of the character conversion unit 11 sends the converted character data "*photograph*" directly to the display unit 30 (step S10 in FIG. 5). That is, converted character data "*photograph*" is displayed as a part of the electronic mail text as shown at (6) in FIG. 6E.

In the example described above, the functions the user can start include the camera function, schedule function, and character type switching function. If registered and stored in the function name dictionary, other functions may also be started in the same way. For example, the function to insert an attached file into electronic mail, the function to insert a fixed form sentence into mail text, the function to call a template (fixed format), and so on may be started.

One example of the mobile terminal of the present invention has been described.

The mobile terminal described in this example includes the control unit, the display unit, the character conversion unit, and the dictionary table in which data corresponding to functions related to characters is stored. If data corresponding to the function related to entered characters is present in the dictionary table, the character conversion unit outputs a symbol corresponding to the function. The symbol is displayed on the display unit.

To describe more in detail, even while the mobile terminal in the example is executing a function that requires character entry, the user may enter input character information related to another function that the user wants to start. Upon receiving the character information, the character conversion unit searches the dictionary table for the entered characters. If the characters are stored in the dictionary table, the entered characters are converted to a symbol (an icon or a character string) for starting the function related to the entered characters and the converted symbol is displayed on the display unit. After the symbol is displayed, the control unit starts the function corresponding to the symbol when the user selects and confirms the displayed symbol.

In this way, the mobile terminal in this example achieves the effect that the user can start a desired function easily without having to perform an extra operation, for example, without having to open the function menu and select a desired function from it.

In addition, a desired function may be started by simply entering input character information related to the function to be started. This achieves the effect that there is no need to provide new function keys on a mobile terminal that becomes increasingly compact.

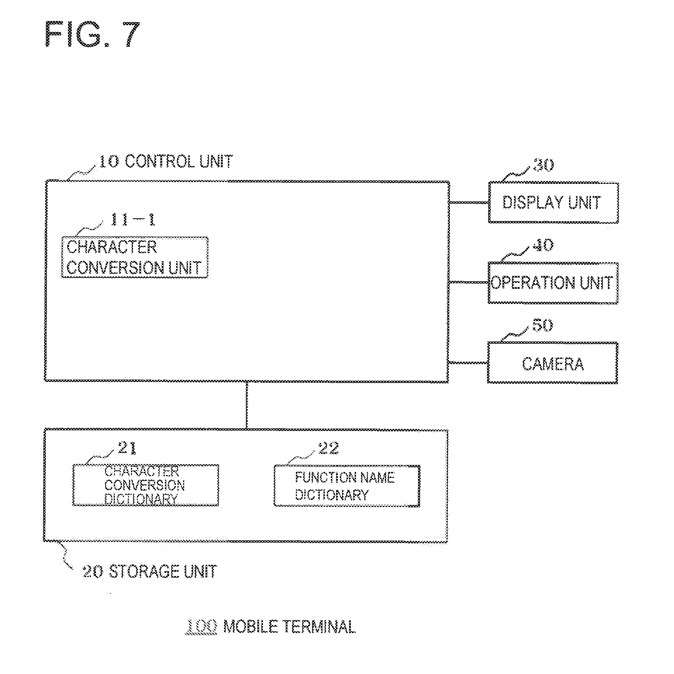

Next, referring to FIGS. 7-9, a second example of the present invention will be described.

The second example differs from the first example, shown in FIG. 2 to FIG. 6, only in the following points.

That is, a mobile terminal 100 in the second example differs from the mobile terminal in the first example only in the internal function of the character conversion unit 11 of the control unit 10. To distinguish between the first example and the second example, the reference numeral 11-1 is used for a character conversion unit in the second example.

The only difference is that, if converted character data is stored in a function name dictionary 22, the character conversion unit 11-1 sends symbol information for starting the function corresponding to the converted character data, as well as the converted character data, to the display unit.

The following describes only the difference of the second example from the first, example.

FIG. 7 is a block diagram showing the second example of the mobile terminal of the present invention. In FIG. 7, the same reference numeral or symbol is given to the same member as that in FIG. 2, and the description will be omitted.

The mobile terminal 100 shown in FIG. 7 comprises a control unit 10 that controls the general operation of the mobile terminal 100 and a storage unit 20 in which dictionaries are stored. The mobile terminal 100 further comprises a display unit 30 that displays information output from the control unit 10, an operation unit 40 via which an instruction or data is input to the control unit 10, and a camera 50 used to photograph an image.

The control unit 10 includes a CPU, not shown, that executes the software, stored in the storage unit 20, to control the operation of the mobile terminal 100.

And, the control unit 10 executes various types of function included in the mobile terminal 100 such as the phone call sending/receiving function, call function, electronic mail function, Internet connection function, schedule function, address book function, camera function, and telephone book function. In addition, the control unit 10 executes the character conversion function.

The character conversion function is implemented by the character conversion unit 11-1 of the control unit 10. The character conversion unit 11-1 converts kana or alphabetical input character information, received via the operation unit 40 when electronic mail is created or schedule data is received, to kanji or symbol data.

The other components shown in FIG. 7 are the same as those in the first example and so the further description of FIG. 7 will be omitted.

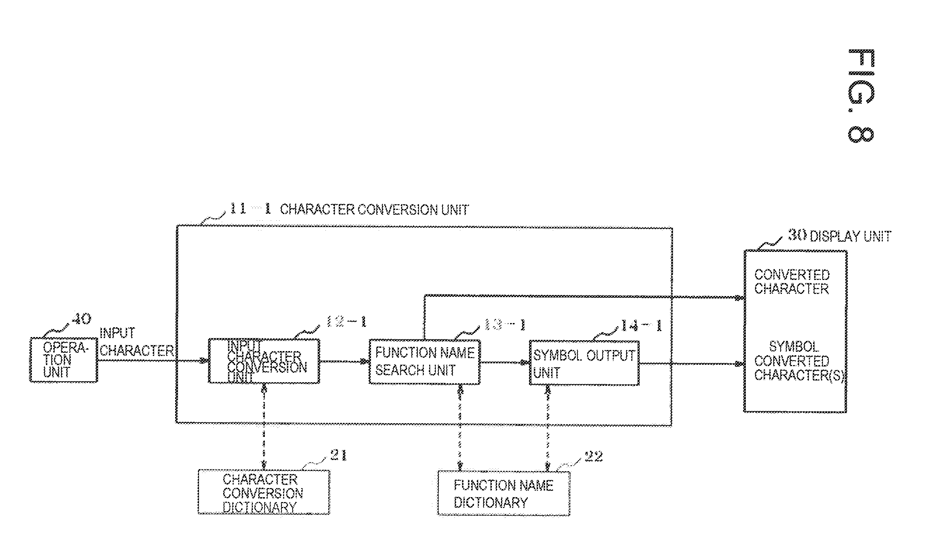

Next, referring to FIG. 8, the following describes the detailed configuration of the character conversion unit 11-1 shown in FIG. 7.

FIG. 8 is a detailed block diagram showing an example of the character conversion unit in the second example. In FIG. 8, the same reference numeral or symbol is given to the same member as that in FIG. 3, and the description will be omitted.

The character conversion unit 11-1 shown in FIG. 8 comprises an input character conversion unit 12-1, a function name search unit 13-1, and a symbol output unit 14-1.

The input character conversion unit 12-1 receives input character information composed of kana or alphabetical characters entered from the operation unit 40 and, by referencing the character conversion dictionary 21, converts the received characters to data indicating kanji, katakana, or hiragana characters. The input character conversion unit 12-1 sends the converted character data to a function name search unit 13-1.

The function name search unit 13-1 receives the converted character data sent from the input character conversion unit 12-1 and searches the function name dictionary 22 to check if the converted character data is stored as a word. If the converted character data is stored in the function name dictionary 22, the function name search unit 13-1 sends the character data on the function name corresponding to the converted character data, as well as the converted character data, to the symbol output unit 14-1.

If the converted character data is not stored in the function name dictionary 22, the function name search unit 13-1 sends the converted character data, received form the input character conversion unit 12-1, directly to the display unit 30.

The symbol output unit 14-1 receives the character data on the function name, as well as the converted character data, from the function name search unit 13-1. And, by referencing the function name dictionary 22, the symbol output unit 14-1 selects symbol information for starting the function corresponding to the character data on the function name, and sends the selected symbol information, as well as the converted character data, to the display unit 30.

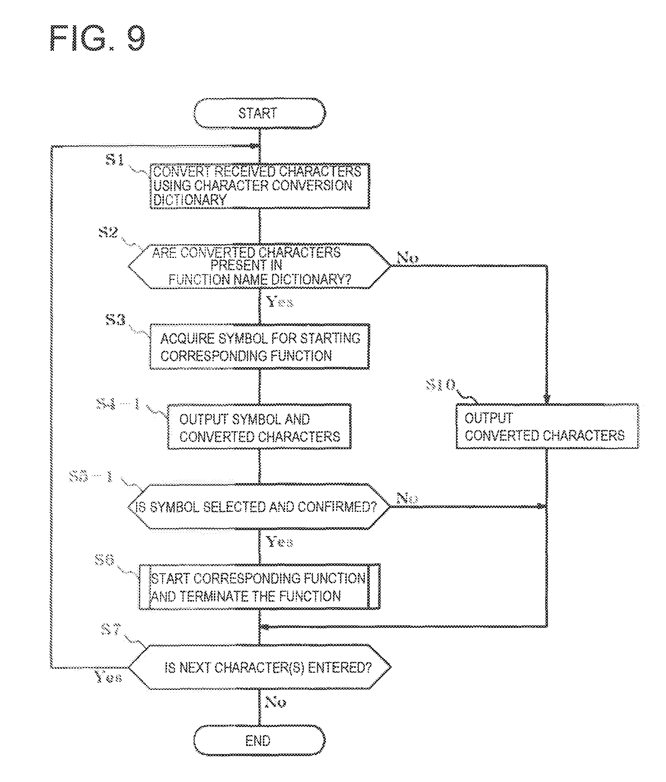

Next, referring to FIG. 9, the following describes the operation of the second example in detail.

FIG. 9 is a flowchart showing the operation of the second example. In FIG. 9, the same reference numeral or symbol is given to the same member as that in FIG. 5, and the description will be omitted if not necessary.

First, when the user starts entering characters on the mobile terminal 100, the input character conversion unit 12-1 of the character conversion unit 11-1 accepts input character information entered from the operation unit 40. The input character conversion unit 12-1 uses the character conversion dictionary 21 to convert the input character information to character data such as kanji, katakana, and hiragana data (step S1 in FIG. 9). After that, the input character conversion unit 12-1 sends the converted character data to the function name search unit 13-1.

The function name search unit 13-1 receives the converted character data from the input character conversion unit 12-1 and searches the function name dictionary 22 to check if the converted character data is stored as a word (step S2).

If the converted character data is not present in the function name dictionary 22 (No in step S2), the function name search unit 13-1 sends the converted character data directly to the display unit 30 (step S10). After that, control is passed to step S7.

If the converted character data is present in the function name dictionary 22 as a keyword (Yes in step S2), the function name search unit 13-1 acquires the character data on the function name corresponding to the converted character data. After that, the function name search unit 13-1 sends the acquired character data on the function name, as well as the converted character data, to the symbol output unit 14-1.

The symbol output unit 14-1 receives the character data on the function name and the converted character data from the function name search unit 13-1. And, the symbol output unit 14-1 references the function name dictionary 22 and acquires the symbol information on the symbol for starting the function corresponding to the character data on the function name (step S3). Next, the symbol output unit 14-1 sends the acquired symbol information, as well as the converted character data, to the display unit 30 (step S4-1).

Next, the character conversion unit 11-1 checks if the symbol displayed on the display unit 30 is selected and confirmed (step S5-1).

If the symbol is selected and confirmed (Yes in step S5-1), the character conversion unit 11-1 returns the control of the mobile terminal 100 to the control unit 10 of the mobile terminal 100. After the function corresponding to the symbol is started and the execution of that function is terminated (step S6), the control unit 10 returns the control of the mobile terminal 100 to the character conversion unit 11-1. That is, the character conversion unit 11-1 returns to the state in which the character entry operation is continued.

The character conversion unit 11-1 checks if the next input character information is entered (step S7).

If the next input character information is entered (Yes in step S7), control is passed back to step S1 and the character conversion unit 11-1 performs the input character conversion operation again.

If the symbol on the display unit 30 is not selected and confirmed in step S5-1, for example, if the converted character data is selected and confirmed (No in step S5-1), the character conversion unit 11-1 passes control to step S7 assuming that the character input operation is continued. And, the character conversion unit 11-1 checks if the next input character is entered.

The second example of the mobile terminal of the present invention has been described.

The mobile terminal described in this example includes the control unit, the display unit, the character conversion unit, and the dictionary table in which data corresponding to functions related to characters is stored. If data corresponding to the function related to entered characters is present in the dictionary table, the character conversion unit outputs a symbol corresponding to the function as well as the converted characters produced by converting the entered characters. The symbol and the converted characters are displayed on the display unit.

To describe more in detail, even while the mobile terminal in the second example is executing a function that requires character entry, the user may enter input character information related to another function that the user wants to start. Upon receiving the character information, the character conversion unit searches the dictionary table for the entered characters. If the characters are stored in the dictionary table, the entered characters are converted to a symbol (an icon or a character string) for starting the function related to the entered characters. And, the symbol as well as the converted characters produced by converting the entered character information is displayed on the display unit. After the symbol and the converted characters are displayed, the control unit starts the function corresponding to the symbol if the user selects and confirms the displayed symbol. If the user selects and confirms the displayed converted characters, the character input operation is continued.

In this way, the mobile terminal in this example achieves the effect that the user can start a desired function easily without having to perform an extra operation, for example, without having to open the function menu and select a desired function from it.

In addition, this example further increases the convenience of the character input function because, if the user does not select and confirm a symbol, the character input operation is continued.

The embodiments and the examples may be changed and adjusted in the scope of the entire disclosure (including claims) of the present invention and based on the basic technological concept. In the scope of the claims of the present invention, various disclosed elements may be combined and selected in a variety of ways. That is, it is to be understood that the present invention includes modifications and changes that may be made by those skilled in the art within the entire disclosure, including claims, and based on the technological concept.

For example, though the present invention has been described in the embodiment and examples given above using the examples of a mobile terminal, the present invention is applicable to other information processing devices (terminals), such as personal computers, other peripheral devices, and home information appliances, as long as the principle of the invention may is applicable and the effect of the invention is achieved.

## Claims

1. A terminal comprising:
a display unit;
a character conversion unit that recognizes a function related to entered characters in a character acceptable state, converts the entered characters to a symbol to be displayed on said display unit for starting the recognized function, and outputs the symbol; and
a control unit that starts the function corresponding to the symbol displayed on said display unit.

2. The terminal as defined by claim 1, further comprising a dictionary table in which data, corresponding to functions related to characters, is stored wherein
if data corresponding to a function related to the entered characters is present in said dictionary table, said character conversion unit outputs the symbol corresponding to the function.

3. The terminal as defined by claim 2, wherein
said character conversion unit comprises:
an input character conversion unit that converts the entered characters using a character conversion dictionary and generates converted characters;
a function name search unit that searches said dictionary table to check if the converted characters, sent from said input character conversion unit, are present and, if present, acquires a function name corresponding to the converted characters; and
a symbol output unit that acquires a symbol for starting a function corresponding to the function name, sent from said function name search unit, and sends the symbol to said display unit.

4. The terminal as defined by claim 3, wherein
if the converted characters sent from said input character conversion unit are not present in said dictionary table, said function name search unit sends the converted characters to said display unit.

5. The terminal as defined by one of claims 2-3, wherein
if data corresponding to a function related to the entered characters is present in said dictionary table, said character conversion unit outputs the symbol corresponding to the function as well as characters produced by converting the entered characters.

6. The terminal as defined by one of claims 1-5, wherein
said symbol is composed of an icon or a character string.

7. A function startup method comprising:
a conversion step that recognizes a function related to entered characters in a character acceptable state, and converts the entered characters to a symbol for starting the recognized function;
a display step that displays the converted symbol on a display unit; and
a startup step that starts the function corresponding to the symbol displayed on said display unit.

8. The function startup method as defined by claim 7, wherein
if data corresponding to a function related to the entered characters is present in a dictionary table in said conversion step, the symbol corresponding to the function is output, said dictionary table storing therein data corresponding to functions related to characters.

9. The function startup method as defined by claim 8, wherein
said conversion step comprises:
a generation step that converts the entered characters using a character conversion dictionary for generating converted characters;
an acquisition step that searches said dictionary table to check if the converted characters, generated in said generation step, are present therein and, if present, acquires a function name corresponding to the converted characters; and
a symbol output step that acquires a symbol for starting a function corresponding to the function name, acquired in said acquisition step, and sends the symbol to said display unit.

10. The function startup method as defined by claim 9, wherein
if the converted characters are not present in said dictionary table in said acquisition step, the converted characters are sent to said display unit.

11. The function startup method as defined by claim 8, wherein
if data corresponding to a function related to the entered characters is present in said dictionary table, said display step outputs the symbol corresponding to the function as well as converted characters produced by converting the entered characters.

12. The function startup method as defined by one of claims 7-11, wherein
said symbol is composed of an icon or a character string.

13. A program causing a terminal to execute:
conversion processing of recognizing a function related to entered characters in a character acceptable state and converting the entered characters to a symbol for starting the recognized function;
display processing of displaying the converted symbol on a display unit; and
startup processing of starting the function corresponding to the symbol displayed on said display unit.

14. The program as defined by claim 13, wherein
if data corresponding to a function related to the entered characters is present in a dictionary table in said conversion processing, the symbol corresponding to the function is output, said dictionary table storing therein data corresponding to functions related to characters.

15. The program as defined by claim 14, wherein
said conversion processing comprises:
generation processing of converting the entered characters using a character conversion dictionary for generating converted characters;
acquisition processing of searching said dictionary table to check if the converted characters, generated in said generation processing, are present therein and, if present, acquiring a function name corresponding to the converted characters; and
symbol output processing of acquiring a symbol for starting a function corresponding to the function name, acquired in said acquisition processing, and sending the symbol to said display unit.

16. The program as defined by claim 15, wherein
if the converted characters are not present in said dictionary table in said acquisition processing, the converted characters are sent to said display unit.

17. The program as defined by claim 14, wherein
if data corresponding to a function related to the entered characters is present in said dictionary table, said display processing outputs the symbol corresponding to the function as well as converted characters produced by converting the entered characters.

18. The program as defined by one of claims 13-17, wherein
a symbol composed of an icon or a character string is displayed.
